# EUROPEAN PATENT SPECIFICATION

(11) **EP 2 216 191 B1**
(45) Date of publication and mention of the grant of the patent: **10.08.2016**
(21) Application number: 10152819.8
(22) Date of filing: 05.02.2010
(51) Int. Cl.: B60G 17/019, B62K 25/04

(54) **Motorcycle**
Motorrad
Motocyclette

(30) Priority: 09.02.2009 JP 2009027233
(43) Date of publication of application: 11.08.2010
(73) Proprietor: Yamaha Hatsudoki Kabushiki Kaisha, Iwata-shi, Shizuoka 438-8501 (JP); Yamaha Motor Electronics Co., Ltd., Shizuoka-ken 437-0292 (JP)
(72) Inventor: Sekizuka, Shinnosuke, Iwata-shi Shizuoka 438-8501 (JP); Nagata, Tsuyoshi, Shizuoka-ken 437-0292 (JP)
(74) Representative: Zimmermann, Tankred Klaus

(56) References cited:
- EP-A1- 2 784 345
- EP-A2- 1 930 233
- CN-A- 101 200 212
- US-A- 5 211 420

## Description

### BACKGROUND OF THE INVENTION

### Field of the Invention

The present invention relates to motorcycles. The invention relates more specifically to a motorcycle including an electronically controlled suspension system.

### Description of the Background Art

There have been known electronically controlled suspension systems used to electronically control the damping characteristic of a cushion member. The electronically controlled suspension system controls the damping characteristic according to the magnitude of force applied on the cushion member, the expansion/compression speed of the cushion member and the like. The use of the electronically controlled suspension system to a vehicle provides a comfortable maneuvering environment.

Electric power is necessary to use the electronically controlled suspension system. The use of the electronically controlled suspension system raises the power consumption of the vehicle. When the engine speed is low, the amount of electricity generated in a generator is small. When the electronically controlled suspension system is driven in a low engine-speed state, the voltage level of the battery may be lowered.

JP 11-99816 A discloses a device for reducing the power consumption of an electronically controlled suspension system. An automobile disclosed by JP 11-99816 A detects the speed of the automobile using a vehicle speed sensor and stops supplying current to the electronically controlled suspension system while the vehicle is in a stopped state.

US 5,211,420 A which is considered as the closest prior art describes a suspension system for two-wheeled vehicles capable of adjusting effective height of the vehicle and the spring rate of the suspension. In the front suspension of a two-wheeled vehicle, a left-right suspension mechanism is employed with one component of the suspension having a variable seat driven by hydraulic pressure. The other component includes two springs in series with a seat therebetween. A hydraulic cylinder may be actuated to effectively reduce or eliminate the operation of one of the springs to change the spring rate of the system by moving and retaining the seat toward one of the springs. Actuator motors control damping resistance through adjustable damping orifices defined by needle valves and associated seats. A unitary damping and suspension spring mechanism associated with the rear suspension provides a hydraulic cylinder in association with a seat for the suspension spring to vary the height of the vehicle.

### SUMMARY OF THE INVENTION

It is an object of the present invention to improve the convenience of the rider while keeping power consumption from increasing in a motorcycle including an electronically controlled suspension system.

This object is achieved by a motorcycle of claim 1.

Other features, elements, steps, characteristics and advantages of the present invention will become more apparent from the following detailed description of the preferred embodiments of the present invention with reference to the attached drawings.

### BRIEF DESCRIPTION OF THE DRAWINGS

Fig. 1 is a left side view of a motorcycle according to a preferred embodiment of the present invention.
Fig. 2 is a system overall view of a front suspension system.
Fig. 3 is a view showing a flow of a hydraulic fluid when a front fork is expanded.
Fig. 4 is a view showing a flow of the hydraulic fluid when the front fork is compressed.
Fig. 5 is a system overall view of a rear suspension system.
Fig. 6 is a block diagram of a control system including a front suspension system and the rear suspension system.
Fig. 7 is a graph showing examples of an electronic control map for the front suspension system.
Fig. 8 is a graph showing examples of an electronic control map for the rear suspension system.
Figs. 9 to 11 are flowcharts for illustrating power saving control according to a first preferred embodiment of the present invention.
Fig. 12 is a flowchart for illustrating power saving control according to a second preferred embodiment of the present invention.
Figs. 13 and 14 are flowcharts for illustrating power saving control according to a third preferred embodiment of the present invention.

### DETAILED DESCRIPTION OF THE PREFERRED EMBODIMENTS

The inventor focused on the fact that a motorcycle was used in a special manner in relation with an electronically controlled suspension system, which did not apply to an automobile. The rider of a motorcycle checks a damping characteristic of a front fork or a rear shock absorber while the vehicle is stopped. The rider for example pressurizes the front fork and checks its damping characteristic. The inventor then realized that there was an inconvenient case for the rider when the damping characteristic is different between when the vehicle travels and when the vehicle stops. Now, preferred embodiments of the present invention will be described in conjunction with the accompanying drawings.

### First Preferred Embodiment

### 1. Overall Structure of Motorcycle

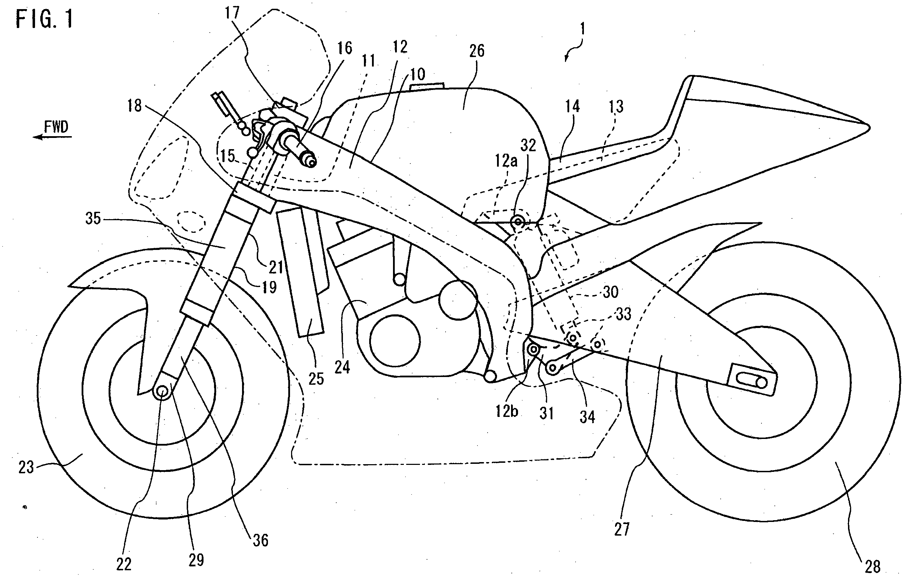

Fig. 1 is a left side view of a motorcycle 1. In Fig. 1, the arrow FWD indicates the forward direction in the advancing direction of the motorcycle 1. As shown in Fig. 1, the motorcycle 1 includes a body frame 10. The body frame 10 includes a head pipe 11, a main frame 12, and a seat frame 13. The head pipe 11 is provided in a front part of the vehicle. The main frame 12 extends backward and downward from the head pipe 11. The seat frame 13 is attached at a rear part of the main frame 12. The seat frame 13 extends backward and upward. A seat 14 is provided above the seat frame 13.

A steering shaft 15 is rotatably inserted in the head pipe 11. A handle 16 is attached at an upper end of the steering shaft 15.

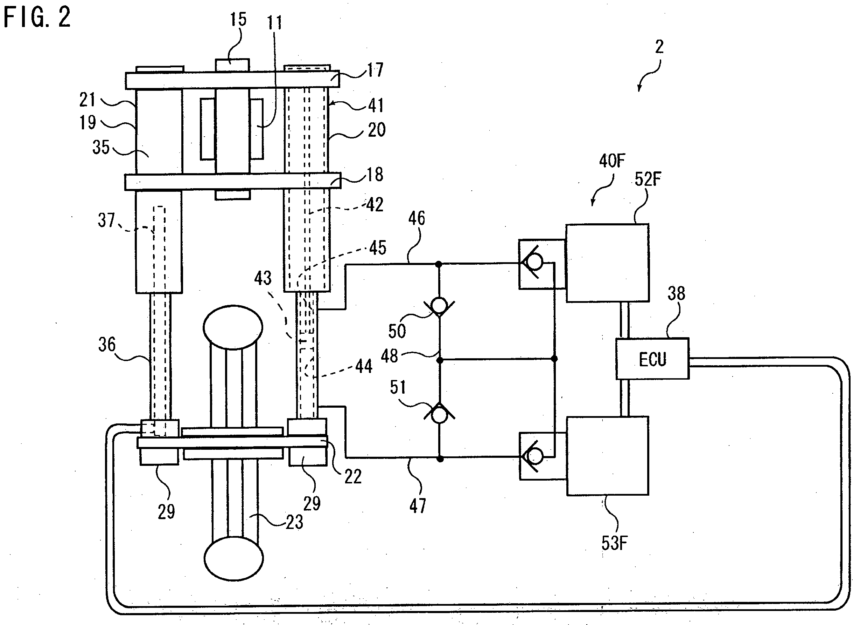

Fig. 2 is a system overall view of a front suspension system 2. As shown in Fig. 2, an upper bracket 17 is attached at an upper end of the steering shaft 15. An under bracket 18 is attached at an lower end of the steering shaft 15.

The upper bracket 17 and the under bracket 18 are provided with a front fork 19 as a cushion member. The front fork 19 includes a right front fork 20 and a left front fork 21. Axle brackets 29 are attached at a lower ends of the right front fork 20 and the left front fork 21. An axle 22 is supported by the left and right axle brackets 29. A front wheel 23 is supported rotatably at the axle 22.

As shown in Fig. 1, an engine 24 is attached at a lower part of the main frame 12. A radiator 25 is provided in front of the engine 24. A fuel tank 26 is provided above the engine 24.

The main frame 12 is provided with a pivot shaft that is not shown behind the engine 24. A rear arm 27 is attached swingably at the pivot shaft. A rear wheel 28 is supported rotatably at a rear end of the rear arm 27. The rear wheel 28 is connected with the output shaft of the engine 24 through a power transmission mechanism that is not shown.

A rear shock absorber 30 as a cushion member is provided between the main frame 12 and the rear arm 27. More specifically, a support portion 12a is provided at a rear part of the main frame 12. An attachment portion 32 of the rear shock absorber 30 is attached at the support portion 12a. A support portion 12b is provided at a rear end of the main frame 12. One end of a first link member 31 is supported swingably at the support portion 12b. The other end of the first link member 31 is coupled to an attachment portion 33 of the rear shock absorber 30. One end of a second link member 34 is attached swingably at the first link member 31. The other end of the second link member 34 is connected to the rear arm 27. In this way, the rear shock absorber 30 is expanded/compressed according to the swinging of the rear arm 27.

### 2. Structure of Front Suspension System 2

The front suspension system 2 includes the front fork 19, a hydraulic circuit 40F, an ECU 38, and the like. As shown in Fig. 2, the front fork 19 is a so-called telescopic fork. The right front fork 20 and the left front fork 21 include an outer tube 35 and an inner tube 36. The outer tube 35 is attached to the steering shaft 15 through the upper bracket 17 and the under bracket 18.

The axle bracket 29 is attached at a lower end of the inner tube 36. The inner tube 36 is inserted in the outer tube 35. The inner tube 36 can reciprocate in the axial direction of the outer tube 35 relative to the outer tube 35. The inner tube 36 is displaced downward relative to the outer tube 35, so that the front fork 19 expands. The inner tube 36 is displaced upward relative to the outer tube 35, so that the front fork 19 is compressed.

The left front fork 21 is provided with an expansion/compression detector 37. The expansion/compression detector 37 detects the amount of expansion/compression of the left front fork 21. According to the preferred embodiment, a stroke sensor is used as the expansion/compression detector 37. A sensor other than the stroke sensor may be used as the expansion/compression detector 37. The arrangement or the manner of attaching the expansion/compression detector 37 is not particularly limited. The right front fork 20 may be provided with the expansion/compression detector 37.

The right front fork 20 serves as an electronically controlled shock absorber. Therefore, the right front fork 20 will also be referred to as "front shock absorber 41." The front shock absorber 41 is an oil type shock absorber. Here, the "electronically controlled shock absorber" refers to a shock absorber having its damping characteristic adjusted by electronic control. The "oil type shock absorber" refers to a shock absorber using a hydraulic fluid. The front shock absorber 41 is controlled by an ECU (electronic control unit) 38 as a controller.

The front shock absorber 41 includes the above-described inner tube 36, a rod 42, and a piston 43, and is connected to the hydraulic circuit 40F. The rod 42 is fixed at the outer tube 35 so that it cannot be displaced. The piston 43 is attached at a lower end of the rod 42. The piston 43 is provided in the inner tube 36 that forms a cylinder. The space of the inner tube 36 is divided into a compression side oil chamber 44 and an expansion side oil chamber 45 by the piston 43. According to the present preferred embodiment, the compression side oil chamber 44 is positioned under the expansion side oil chamber 45.

The hydraulic circuit 40F is a circuit arranged to control a damping characteristic to the expansion/compression operation of the front fork 19. The hydraulic circuit 40F is an assembly including an oil feed pipe and a valve. The hydraulic circuit 40F is connected to the compression side oil chamber 44 and the expansion side oil chamber 45. The hydraulic circuit 40F includes a first oil chamber 46 and a second oil chamber 47. The first oil chamber 46 is connected to the expansion side oil chamber 45. The second oil chamber 47 is connected to the compression side oil chamber 44.

According to the present preferred embodiment, the "oil chamber" refers to a space in which a hydraulic fluid exists. The oil chamber refers not only to a space where the hydraulic fluid stays but also to a path through which the hydraulic fluid passes. More specifically, the shape of the oil chamber is not particularly limited.

The first oil chamber 46 is connected to a third oil chamber 48 through a first check valve 50. The first check valve 50 restricts the flow of the hydraulic fluid from the first oil chamber 46 to the third oil chamber 48. The first check valve 50 allows the hydraulic fluid to come into the first oil chamber 46 from the third oil chamber 48.

The first and third oil chambers 46 and 48 are connected to each other through a first piston valve 52F that is electronically controlled. The first piston valve 52F allows the hydraulic fluid to come into the third oil chamber 48 from the first oil chamber 46. The first piston valve 52F restricts the flow of the hydraulic fluid into the first oil chamber 46 from the third oil chamber 48. The first piston valve 52F provides the hydraulic fluid with flow resistance when the hydraulic fluid comes into the third oil chamber 48 from the first oil chamber 46.

The second oil chamber 47 is connected to the third oil chamber 48 through a second check valve 51. The second check valve 51 restricts the flow of the hydraulic fluid into the third oil chamber 48 from the second oil chamber 47. The second check valve 51 allows the hydraulic fluid to come into the second oil chamber 47 from the third oil chamber 48. The first and second check valves 50 and 51 may be formed integrally or discretely.

The second and third oil chambers 47 and 48 are connected to each other through a second piston valve 53F that is electronically controlled. The second piston valve 53F allows the hydraulic fluid to come into the third oil chamber 48 from the second oil chamber 47. The second piston valve 53F restricts the flow of the hydraulic fluid into the second oil chamber 47 from the third oil chamber 48. The second piston valve 53F provides the hydraulic fluid with flow resistance when the hydraulic fluid comes into the third oil chamber 48 from the second oil chamber 47.

The magnitudes of the flow resistance provided to the hydraulic fluid by the first and second piston valves 52F and 53F are electronically controlled. The first and second piston valves 52F and 53F are connected to the ECU 38. As will be described, the magnitudes of the flow resistance provided to the hydraulic fluid by the first and second piston valves 52F and 53F are controlled by the ECU 38.

According to the present preferred embodiment, the first and second piston valves 52F and 53F are solenoid valves. The first and second piston valves 52F and 53F may be other kinds of valves than the solenoid valves.

### 3. Flow of Hydraulic Fluid during Expansion of Front Fork 19

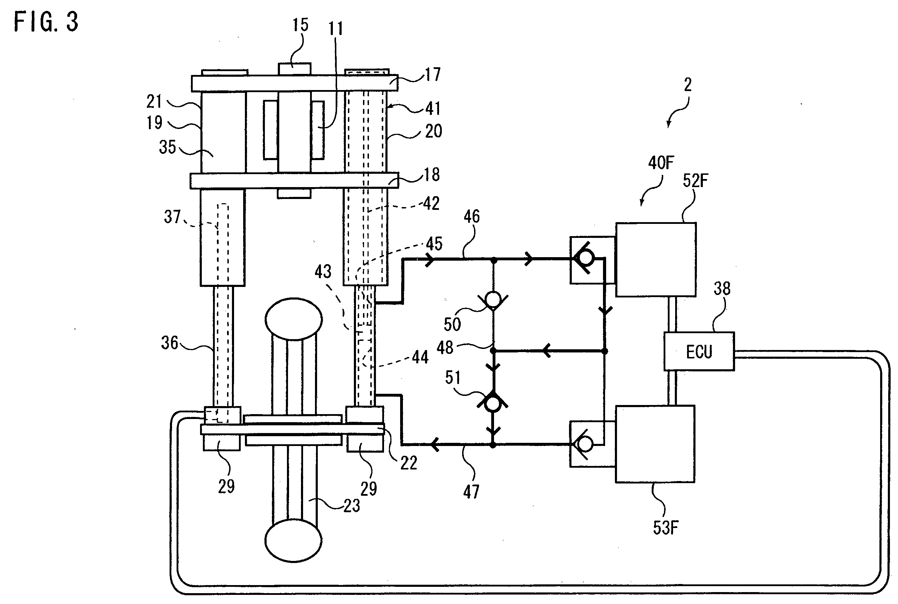

As shown in Fig. 3, when the right front fork 20 is expanded, in other words, when the front fork 19 is expanded, the hydraulic fluid runs from the expansion side oil chamber 45 in the order of the first oil chamber 46, the first piston valve 52F, the third oil chamber 48, the second check valve 51, and the second oil chamber 47 and comes into the compression side oil chamber 44.

More specifically, when the right front fork 20 is expanded, the piston 43 moves upward relative to the inner tube 36. The capacity of the expansion side oil chamber 45 is reduced. A part of the hydraulic fluid in the expansion side oil chamber 45 comes into the first oil chamber 46. The first check valve 50 restricts the flow of the hydraulic fluid into the third oil chamber 48 from the first oil chamber 46. The first piston valve 52F allows the hydraulic fluid to come into the third oil chamber 48 from the first oil chamber 46. Therefore, the hydraulic fluid in the first oil chamber 46 comes into the third oil chamber 48 through the first piston valve 52F. The hydraulic fluid coming into the third oil chamber 48 is provided with flow resistance by the first piston valve 52F.

The second check valve 51 allows the hydraulic fluid to come into the second oil chamber 47 from the third oil chamber 48. The hydraulic fluid coming into the third oil chamber 48 through the first piston valve 52F comes into the compression side oil chamber 44 through the second check valve 51 and the second oil chamber 47.

The first check valve 50 allows the hydraulic fluid to come into the first oil chamber 46 from the third oil chamber 48. The first piston valve 52F is provided between the first and third oil chambers 46 and 48 and therefore when the right front fork 20 is expanded, the oil pressure in the first oil chamber 46 is higher than the oil pressure in the third oil chamber 48. Therefore, the first check valve 50 is closed. The flow of the hydraulic fluid from the third oil chamber 48 to the first oil chamber 46 is restricted by the first check valve 50.

### 4. Flow of Hydraulic fluid during Compression of Front Fork 19

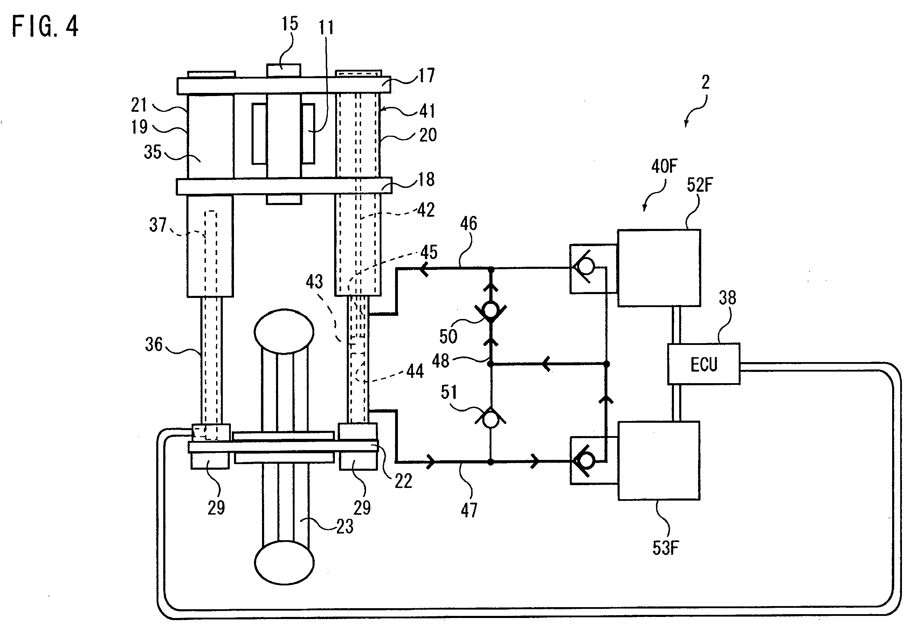

As shown in Fig. 4, when the right front fork 20 is compressed, in other words, when the front fork 19 is compressed, the hydraulic fluid runs from the compression side oil chamber 44 in the order of the second oil chamber 47, the second piston valve 53F, the third oil chamber 48, the second piston valve 50, and the first oil chamber 46 and comes into the expansion side oil chamber 45.

More specifically, when the right front fork 20 is compressed, the piston 43 moves downward relative to the inner tube 36. The capacity of the compression side oil chamber 44 is reduced. A part of the hydraulic fluid in the compression side oil chamber 44 comes into the second oil chamber 47. The second check valve 51 restricts the flow of the hydraulic fluid into the third oil chamber 48 from the second oil chamber 47. The second piston valve 53F allows the hydraulic fluid to come into the third oil chamber 48 from the second oil chamber 47. The hydraulic fluid in the second oil chamber 47 comes into the third oil chamber 48 via the second piston valve 53F. The hydraulic fluid coming into the third oil chamber 48 is provided with flow resistance by the second piston valve 53F.

The first check valve 50 allows the hydraulic fluid to come into the first oil chamber 46 from the third oil chamber 48. The hydraulic fluid coming into the third oil chamber 48 through the second piston valve 53F enters the expansion side oil chamber 45 through the first check valve 50 and the first oil chamber 46.

The second check valve 51 allows the hydraulic fluid to come into the second oil chamber 47 from the third oil chamber 48. The second piston valve 53F is provided between the second oil chamber 47 and the third oil chamber 48, and therefore when the right front fork 20 is compressed, the oil pressure in the second oil chamber 47 is higher than that in the third oil chamber 48. Therefore, the second check valve 51 is closed. The flow of the hydraulic fluid from the third oil chamber 48 to the second oil chamber 47 is restricted by the second check valve 51.

### 5. Structure of Rear Suspension System 3

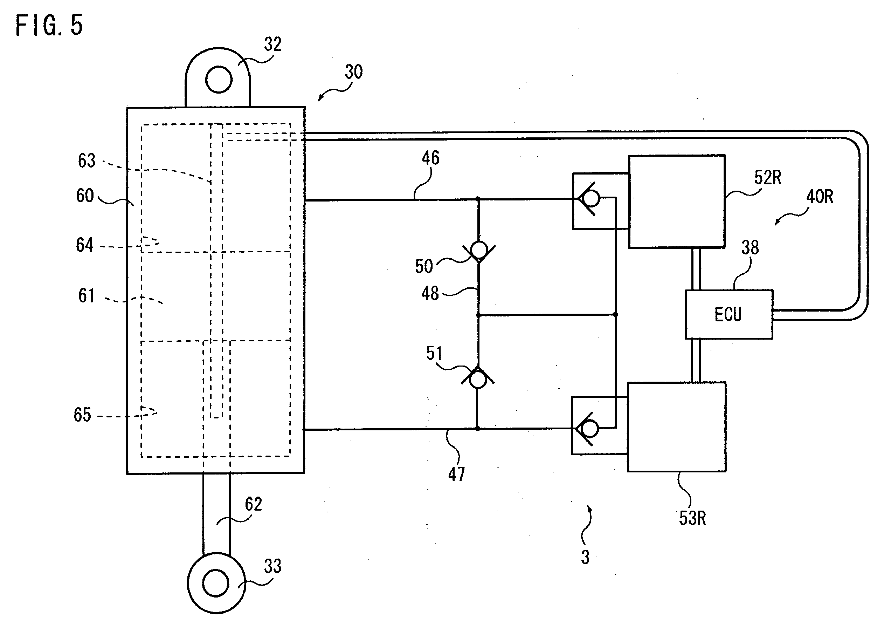

Fig. 5 is a system overall view of a rear suspension system 3. The rear suspension system 3 includes the rear shock absorber 30, a hydraulic circuit 40R, the ECU 38, and the like. The rear shock absorber 30 is electronically controlled. The rear shock absorber 30 is an oil type shock absorber. The rear shock absorber 30 has substantially the same structure as that of the front shock absorber 41 described above.

The shock absorber 30 includes a cylinder 60, a piston 61, and a rod 62. The cylinder 60 is provided with an attachment portion 32 connected to the support portion 12a shown in Fig. 1. The piston 61 is provided in the cylinder 60 so that it can reciprocate. The inside space of the cylinder 60 is separated into a compression side oil chamber 64 and an expansion side oil chamber 65 by the piston 61. The compression side oil chamber 64 is provided in a position higher than the expansion side oil chamber 65. The arrangement position or the like of the compression side oil chamber 64 and the expansion side oil chamber 65 is not particularly limited.

The rod 62 extends downward from the piston 61. The attachment portion 33 connected to the support portion 12b shown in Fig. 1 is provided at the lower end of the rod 62.

An expansion/compression detector 63 is provided at the rear shock absorber 30. The expansion/compression detector 63 detects the amount of expansion/compression of the rear shock absorber 30. According to the present preferred embodiment, a stroke sensor is used as the expansion/compression detector 63. A sensor other than the stroke sensor may be used as the expansion/compression detector 63.

The compression side oil chamber 64 and the expansion side oil chamber 65 are connected with the hydraulic circuit 40R. The hydraulic circuit 40R is a circuit used to control a damping characteristic to the expansion/compression operation of the rear shock absorber 30. The hydraulic circuit 40R is connected to the rear shock absorber 30 as an assembly.

The hydraulic circuit 40R has the same structure as that of the hydraulic circuit 40F of the front suspension system 2. The first piston valve 52R of the hydraulic circuit 40R functions in the same manner as the first piston valve 52F of the hydraulic circuit 40F. The second piston valve 53R of the hydraulic circuit 40R functions in the same manner as the second piston valve 53F of the hydraulic circuit 40F. The oil chambers 46, 47, and 48 and the check valves 50 and 51 of the hydraulic circuit 40R function in the same manner as those of the hydraulic circuit 40F. Therefore, the hydraulic circuit 40R will not be described in detail. The flow of a hydraulic fluid during the expansion/compression operation of the rear shock absorber 30 is substantially the same as the flow of the hydraulic fluid during the expansion/compression operation of the front fork 19 as described above and therefore will not be described in detail.

### 6. Overall Structure of Suspension System

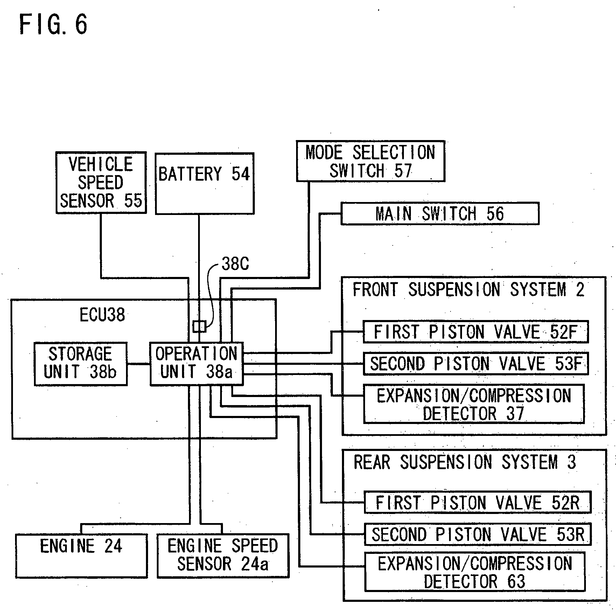

Fig. 6 is an overall view of an electronically controlled suspension system including the front suspension system 2 and the rear suspension system 3. As shown in Fig. 6, the motorcycle 1 is provided with the ECU 38 as a controller. The ECU 38 controls the power of the engine 24. The ECU 38 controls the front suspension system 2 and the suspension system 3. More specifically, the ECU 38 controls the damping characteristics of the front fork 19 and the rear shock absorber 30. The ECU 38 controls the on/off state of power supply to the front fork 19 and the rear shock absorber 30 from the battery 54 as a power supply. Another ECU may be provided to control the power of the engine 24 separately from the ECU 38.

The ECU 38 includes an operation unit 38a and a storage unit 38b. The storage unit 38b stores various kinds of setting information. The storage unit 38b is connected to the operation unit 38a. The operation unit 38a carries out various kinds of operation and controls various components. The operation unit 38 reads out setting information stored in the storage unit 38b and outputs information to the storage unit 38b.

The operation unit 38a is connected with the first and second piston valves 52F and 53F of the hydraulic circuit 40F. The operation unit 38a is connected with an expansion/compression detector 37 as an operation detector. The expansion/compression detector 37 detects the amount of expansion/compression of the front fork 19 and outputs the obtained information to the operation unit 38a. The operation unit 38a operates the stroke speed of the front fork 19 based on the amount of expansion/compression of the front fork 19.

The first and second piston valves 52R and 53R of the hydraulic circuit 40R are connected to the operation unit 38a. The operation unit 38a is connected with the expansion/compression detector 63 as an operation detector. The expansion/compression detector 63 detects the amount of expansion/compression of the rear shock absorber 30 and outputs the information to the operation unit 38a. The operation unit 38a calculates the stroke speed of the rear shock absorber 30 based on the expansion/compression amount of the rear shock absorber 30.

The operation unit 38a is connected with a battery 54 as a power supply. The battery 54 supplies power to the ECU 38. The operation unit 38a is supplied with power from the battery 54 and supplies the first and second piston valves 52F and 53F with constant current corresponding to damping force to be generated at the front fork 19. The operation unit 38a is supplied with power from the battery 54 and supplies the first and second piston valves 52R and 53R with an amount of constant current corresponding to damping force to be generated at the rear shock absorber 30. More specifically, power is supplied to the front fork 19 and the rear shock absorber 30 from the battery 54.

A main relay 38c is connected between the battery 54 and the operation unit 38a. When the main relay 38c is disconnected, power supply to the operation unit 38a from the battery 54 is stopped. The main relay 38c may be provided outside the ECU 38.

An engine speed sensor 24a and a vehicle speed sensor 55 as a travelling state detector are connected to the operation unit 38a. The engine speed sensor 24a detects the engine speed of the engine 24 and outputs the result of detection to the operation unit 38a. The vehicle speed sensor 55 detects the vehicle speed of the motorcycle 1 and outputs the result of detection to the operation unit 38a. The vehicle speed sensor 55 is for example a front wheel speed sensor that detects the rotation speed of the front wheel 23 or a rear wheel speed sensor that detects the rotation speed of the rear wheel 28.

A main switch 56 and a mode selection switch 57 are connected to the operation unit 38a. The main switch 56 is a switch used to control the on/off state of power supply from the battery 54 to the ECU 38.

The mode selection switch 57 is a switch used to select a suspension mode among a plurality of suspension modes. Damping force generated at the front fork 19 and the rear shock absorber 30 varies depending on the selected suspension mode.

### 7. Control of Damping Force to Front Fork 19 and Rear Shock Absorber 30

Now, control of damping force to the front fork 19 and the rear shock absorber 30 will be described in detail.

In the motorcycle 1 according to the present preferred embodiment, a plurality of suspension modes can be selected. Depending on the selected suspension mode, damping force generated at the front fork 19 and the rear shock absorber 30 varies. The motorcycle 1 includes the mode selection switch 57. The rider can operate the mode selection switch 57 to select a suspension mode to be used among the plurality of suspension modes. When the rider switches between the suspension modes, the mode selection switch 57 outputs a mode switch signal corresponding to a selected suspension mode to the operation unit 38a.

According to the present preferred embodiment, the rider can operate the mode selection switch 57 to select between a first suspension mode and a second suspension mode. The second suspension mode can provide damping force higher than that obtained in the first suspension mode.

The number of suspension modes selectable by the rider is not particularly limited. There may be three or more selectable suspension modes. Alternatively, it is not always necessary that there are more than one selectable suspension mode. The motorcycle 1 may have a single fixed suspension mode.

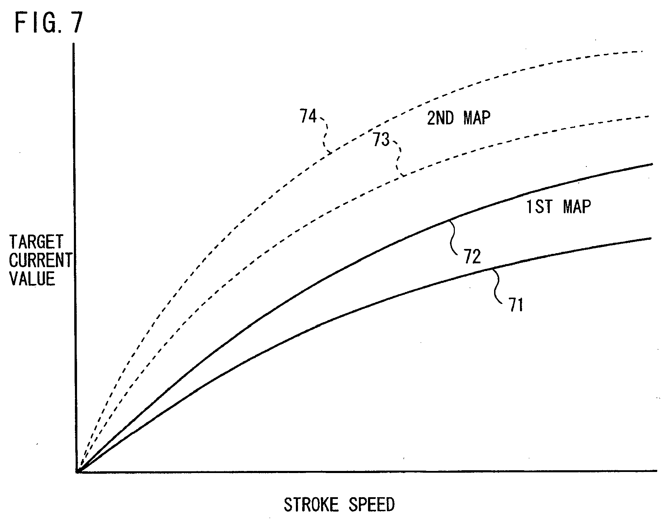

Fig. 7 is a graph showing a damping force control map related to the front fork 19 stored in the storage unit 38b. As shown in Fig. 7, the storage unit 38b stores maps corresponding to various suspension modes. The storage unit 38b stores first maps 71 and 72 for the first suspension mode and second maps 73 and 74 for the second suspension mode.

The first map 71 shows the relation between the stroke speed of the front fork 19 in the first suspension mode when it is expanded and a target value for current supplied to the first piston valve 52F. When the first map 71 in Fig. 7 is referred to, the direction in which the front fork 19 is expanded is considered as the direction of positive speed. At the time, the second piston valve 53F does not have to be particularly controlled and is supplied with current at a fixed value. A control map for the second piston valve 53F is not shown.

The first map 72 shows the relation between the stroke speed of the front fork 19 when it is compressed in the first suspension mode and a target value for current supplied to the second piston valve 53F. When the first map 72 in Fig. 7 is referred to, the direction in which the front fork 19 is compressed is considered as the direction of positive speed. At the time, the first piston valve 52F does not have to be particularly controlled and is supplied with current at a fixed value. A control map for the first piston valve 52F is not shown.

The second map 73 shows the relation between the stroke speed of the front fork 19 when it is expanded in the second suspension mode and a target value for current supplied to the first piston valve 52F. When the second map 73 in Fig. 7 is referred to, the direction in which the front fork 19 is expanded is considered as the direction of positive speed. At the time, the second piston valve 53F does not have to be particularly controlled and is supplied with current at a fixed value. A control map for the second piston valve 53F is not shown.

The second map 74 shows the relation between the stroke speed of the front fork 19 when it is compressed in the second suspension mode and a target value for current to be supplied to the second piston valve 53F. When the second map 74 in Fig. 7 is referred to, the direction in which the front fork 19 is compressed is considered as the direction of positive speed. At the time, the first piston valve 52F does not have to be particularly controlled and is supplied with current at a fixed value. A control map for the first piston valve 52F is not shown.

The operation unit 38a reads out a map corresponding to a suspension mode selected by the mode selection switch 57 among the first maps 71 and 72 and the second maps 73 and 74 from the storage unit 38b. The operation unit 38a calculates target current values for the first and second piston valve 52F and 53F by applying the stroke speed of the front fork 19 calculated based on the amount of expansion/compression detected by the expansion/compression detector 37 to the read out map. The operation unit 38a supplies the first and second piston valves 52F and 53F with amounts of constant current corresponding to the obtained target current values. In this way, damping force corresponding to the selected suspension mode is generated at the front fork 19.

The operation unit 38a according to the present preferred embodiment has a constant current generator but the constant current generator may be provided separately from the operation unit 38a.

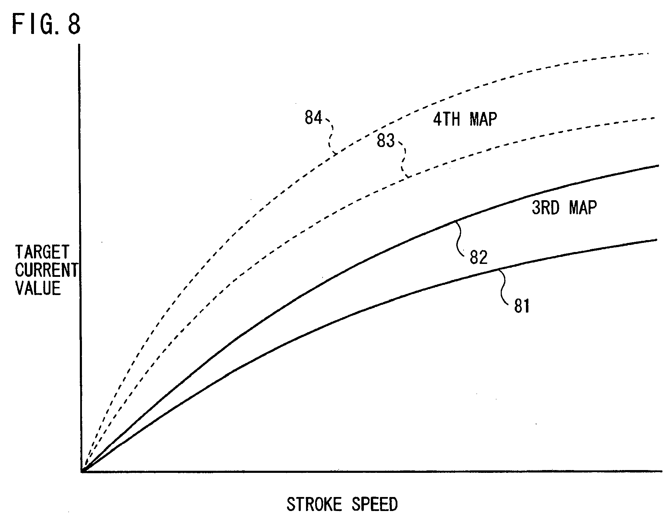

Fig. 8 is a diagram showing a damping force control map related to the rear shock absorber 30 stored in the storage unit 38b. The storage unit 38b stores maps corresponding to various suspension modes as shown in Fig. 8. The storage unit 38b stores third maps 81 and 82 corresponding to the first suspension mode and fourth maps 83 and 84 corresponding to the second suspension mode.

The third map 81 shows the relation between the stroke speed of the rear shock absorber 30 when it is compressed in the first suspension mode and a target value for current supplied to the first piston valve 52R. When the third map 81 in Fig. 8 is referred to, the direction in which the rear shock absorber 30 is compressed is considered as the direction of positive speed. At the time, the second piston valve 53R does not have to be particularly controlled and is supplied with current at a fixed value. A control map for the second piston valve 53R is not shown.

The third map 82 shows the relation between the stroke speed of the rear shock absorber 30 when it is expanded in the first suspension mode and a target value for current supplied to the second piston valve 53R. When the third map 82 in Fig. 8 is referred to, the direction in which the rear shock absorber 30 is expanded is considered as the direction of positive speed. At the time, the first piston valve 52R does not have to be particularly controlled and is supplied with current at a fixed value. A control map for the first piston valve 52R is not shown.

The fourth map 83 shows the relation between the stroke speed of the rear shock absorber 30 when it is compressed in the second suspension mode and a target value for current supplied to the first piston valve 52R. When the fourth map 83 in Fig. 8 is referred to, the direction in which the rear shock absorber 30 is compressed is considered as the direction of positive speed. At the time, the second piston valve 53R does not have to be particularly controlled and is supplied with current at a fixed value. A control map for the second piston valve 53R is not shown.

The fourth map 84 shows the relation between the stroke speed of the rear shock absorber 30 when it is expanded in the second suspension mode and a target value for current supplied to the second piston valve 53R. When the fourth map 84 in Fig. 8 is referred to, the direction in which the rear shock absorber 30 is expanded is considered as the direction of positive speed. At the time, the first piston valve 52R does not have to be particularly controlled and is supplied with current at a fixed value. A control map for the first piston valve 52R is not shown.

The operation unit 38a reads out a map corresponding to a suspension mode selected by the mode selection switch 57 among the third maps 81 and 82 and the fourth maps 83 and 84 from the storage unit 38b. The operation unit 38a calculates target current values for the first and second piston valves 52R and 53R by applying the stroke speed of the rear shock absorber 30 calculated based on the amount of expansion/compression detected by the expansion/compression detector 63 to the read out map. The operation unit 38a supplies amounts of constant current corresponding to the target current values to the first and second piston valves 52R and 53R. In this way, damping force corresponding to the selected suspension mode is generated at the rear shock absorber 30.

In this way, according to the present preferred embodiment, the suspension mode is selected so that damping force generated at the front fork 19 and the rear shock absorber 30 can be varied. The damping characteristic of the front fork 19 and the rear shock absorber 30 can be adjusted depending of the state of a road surface or a traveling state. Therefore, the rider can enjoy more comfortable driving.

Now, power saving control according to the present preferred embodiment will be described in detail. According to the present preferred embodiment, the on/off state of current supply to the first and second piston valves 52F and 53F of the front suspension system 2 and the first and second piston valves 52R and 53R of the rear suspension system 3 is switched depending on a prescribed condition.

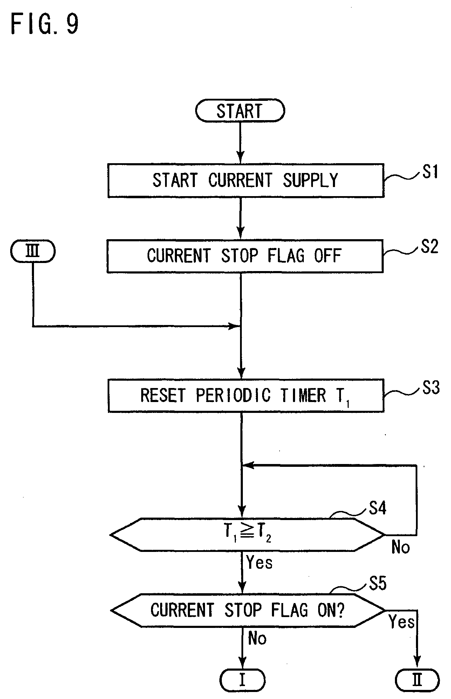

Figs. 9 to 11 are flowcharts for illustrating power saving control according to the first preferred embodiment. When the main switch 56 (Fig. 6) of the motorcycle 1 is turned on, power supply to the ECU 38 is started. As the power is supplied to the ECU 38, the control shown in Figs. 9 to 11 is carried out.

Referring to the flowchart in Fig. 9, when power starts to be supplied to the ECU 38, the operation unit 38a starts to supply current to the first and second piston valves 52F and 53F of the front suspension system 2 and the first and second piston valves 52R and 53R of the rear suspension system 3.

In this way, immediately after the main switch 56 is turned on, a damping characteristic corresponding to a selected suspension mode is generated at the front fork 19 and the rear shock absorber 30. When the main switch 56 is turned on, the rider can check the damping characteristics of the front fork 19 and the rear shock absorber 30 without having the motorcycle 1 traveled.

In step S2, the operation unit 38a turns off a current stop flag. The current stop flag is a flag used to control the on/off state of current supply to the first and second piston valves 52F, 53F, 52R, and 53R. When current is supplied to the first and second piston valves 52F, 53F, 52R, and 53R, the current stop flag is set to off. When current supply to the first and second piston valves 52F, 53F, 52R, and 53R is stopped, the current stop flag is set to on.

In step S3, the operation unit 38a resets a periodic timer T₁. In this way, the periodic timer T₁ starts to count. In step S4, the operation unit 38a determines whether the periodic timer T₁ indicates a predetermined period T₂ or more. If it is determined in step 4 that T₁<T₂, step S4 is carried out again. If it is determined in step S4 that T₁≥T₂, the control proceeds to step S5. Steps S3 and S4 are steps that specify timing for carrying out the power saving control shown in Figs. 9 to 11. The period T₂ can be set suitably corresponding to the characteristic of the motorcycle 1. The period T₂ may be set for example to about several milliseconds.

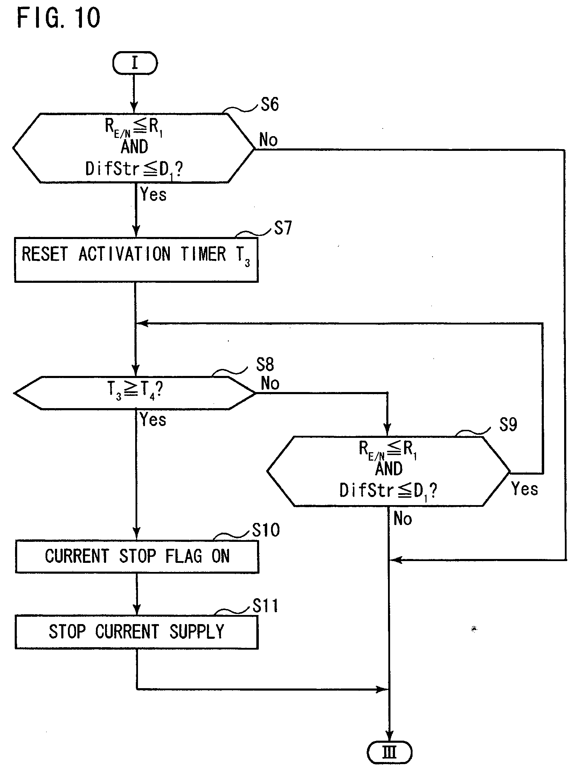

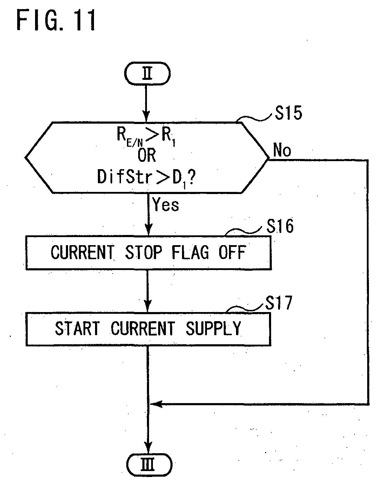

In step S5, the operation unit 38a determines whether the current stop flag is on. If it is determined in step S5 that the current stop flag is off, the control proceeds to step S6 shown in Fig. 10. If it is determined in step S5 that the current stop flag is on, the control proceeds to step S15 shown in Fig. 11. Immediately after the main switch 56 is turned on, the current stop flag is turned off in step S2, so that the control proceeds from step S5 to step S6.

Referring to the flowchart in Fig. 10, the operation unit 38a determines two speeds in step S6. The operation unit 38a determines whether the engine speed R_{E/N} detected by the engine speed sensor 24a is a prescribed engine speed R₁ or less. The operation unit 38a determines whether or not the stroke speeds DifStr of the front fork 19 and the rear shock absorber 30 are a prescribed speed D₁ or less. The stroke speeds DifStr of the front fork 19 and the rear shock absorber 30 are calculated by the operation unit 38a based on the expansion/compression amounts detected by the expansion/compression detector 37 and 63.

As for the stroke speeds DifStr, for example the larger stroke speed between the stroke speeds of the front fork 19 and the rear shock absorber 30 may be used. The average of the stroke speeds of the front fork 19 and the rear shock absorber 30 may be used. Alternatively, the control in Figs. 9 to 11 may be carried out independently between the front suspension system 2 and the rear suspension system 3. When the control is carried out independently, the stroke speed of the front fork 19 may be used for controlling the front suspension system 2 and the stroke speed of the rear shock absorber 30 may be used for controlling the rear suspension system 3. When the control is carried out independently for the front suspension system 2 and the rear suspension system 3, power may be supplied to both of the front and rear suspension systems in the step to start supplying power.

The engine speed R₁ and the speed D₁ may be set as required depending on the kind of the motorcycle. The engine speed R₁ may be for example a value lower than an idle engine speed. The engine speed R₁ is smaller than the idle engine speed, so that power consumption can be reduced in an engine stopped period during which how to reduce power consumption is an issue. The electronic suspension can become effective immediately after the vehicle is started from an idle driving state.

If it is determined in step S6 that R_{E/N}>R or DifStr>D₁, the control returns to step S3 shown in Fig. 9. When the engine speed or the stroke speed is high, power supply to the front suspension system 2 and the rear suspension system 3 is not stopped. The stroke speed is high when operation to the electronically controlled suspension system is generated. An example of the case is when the motorcycle 1 actually starts to travel, and pressure is applied on the front fork 19 and the rear shock absorber 30. Although the motorcycle 1 is not traveling, the rider applies pressure on the front fork 19 and the rear shock absorber 30 to check the damping characteristic in some cases. When period T₁ is counted by steps S3 and S4 and period T₂ elapses, the steps in and after step S5 are once again carried out.

If it is determined in step S6 in Fig. 10 that R_{E/N}≤R₁ and DifStr≤D₁, the control proceeds to step S7. In step S7, the operation unit 38a resets an activation timer T₃. In this way, the activation timer T₃ starts to count activation timing for turning on the current stop flag.

The operation unit 38a determines in step S8 whether the activation timer T₃ is equal to or larger than the period T₄.

If it is determined in step S8 that T₃<T₄, the control proceeds to step S9. In step S9, the operation unit 38a determines whether the engine speed. R_{E/N} detected by the engine speed sensor 24a is equal to lower than the speed R₁ similarly to step S6. The operation unit 38a also determines whether the stroke speeds DifStr of the front fork 19 and the rear shock absorber 30 are equal to or lower than the speed D₁.

If it is determined in step S9 that R_{E/N}≤R₁ and DifStr≤D₁, the control returns to step S8. If it is determined in step 9 that R_{E/N}>R₁ or DifStr>D₁, the control returns to step S3 in Fig. 9. If the condition that R_{E/N}≤R₁ and DifStr≤D₁ does not continue for the period T₄, supply of power to the front and rear suspension systems 2 and 3 is not stopped.

If it is determined in step S8 that T₃≥T₄, the control proceeds to step S10. The control proceeds to step S10 only if it is determined that the engine speed continues to be low for the period T₄ and the stroke speeds of the front fork 19 and the shock absorber 30 continue to be low for the period T₄.

In step S10, the operation unit 38a turns on the current stop flag. In step S11, the operation unit 38a stops supplying power to the first and second piston valves 52F, 53F, 52R, and 53R of the front suspension system 2 and the rear suspension system 3.

According to the present preferred embodiment, "stopping supplying power" means the process of lowering power supplied to electronic components to a level in which the electronic components cannot operate. According to the present preferred embodiment, the process of "stopping supplying power" does not necessarily mean the process of nullifying power supplied to the electronic components.

According to the present preferred embodiment, when the engine speed is high or the stroke speeds of the front fork 19 and the shock absorber 30 are high, power supply to the front suspension system 2 and the rear suspension system 3 is not stopped. If it is determined that the engine speed continues to be low for the period T₄ and the stroke speed of the front fork 19 or the rear shock absorber 30 is low for the period T4_{,} power supply to the first and second piston valves 52F, 53F, 52R, and 53R of the front suspension system 2 and the rear suspension system 3 is stopped. More specifically, if the engine speed is lower than a prescribed speed and operation to the electronically controlled suspension system is not generated for a prescribed period, power supply to the electronically controlled suspension system is stopped. If the engine speed is dropped for a very short period or operation to the electronically controlled suspension system is interrupted for a very short period, power-supply is maintained. This prevents power supply from being repeatedly started and interrupted.

When step S11 ends, the steps in and after step S3 shown in Fig. 9 are carried out again. As described above, when the current stop flag is on in step S10, the control proceeds to step S15 in Fig. 11 from step S5. In step S15, it is determined whether R_{E/N}>R₁ or Difstr>D₁.

If it is determined in step S15 that R_{E/N}≤R₁ and Difstr≤D₁, the control returns to step S3 in Fig. 9. The state in which power supply to the first and second piston valves 52F, 53F, 52R, and 53R is stopped is maintained. If the engine speed continues to be low and the stroke speed of the front fork 19 or the rear shock absorber 30 continues to be low, power supply to the first and second piston valves 52F, 53F, 52R, and 53R continues to be stopped.

In step S15 in Fig. 11, if it is determined that R_{E/N}>R₁ or Difstr>D₁, the control proceeds to step S16. In step S16, the operation unit 38a turns off the current stop flag. The operation unit 38a starts to supply power to the first and second piston valves 52F, 53F, 52R, and 53R. Then, the control returns to step S3 in Fig. 9.

According to the present preferred embodiment, if the engine speed is raised or the stroke speed of the front fork 19 or the rear shock absorber 30 is raised while power supply to the first and second piston valves 52F, 53F, 52R, and 53R is stopped, power starts to be supplied to the first and second piston valves 52F, 53F, 52R, and 53R.

As in the foregoing, the ECU 38 according to the present preferred embodiment controls power supply to the electronically controlled suspension system based on the engine speed and the stroke speeds of the front fork 19 and the rear shock absorber 30 related to the traveling state. The on/off state of power supply to the electronically controlled suspension system is controlled in consideration of not only the traveling state but also the expansion/compression operation of the cushion member, which is operation to the electronically controlled suspension system. While power consumption is kept low, rider's convenience can be improved. When operation to the electronically controlled suspension system is generated, power is supplied to the electronically controlled suspension system even while the vehicle is in a stopped state.

If for example the rider carries out pressurizing operation to the front fork 19 or the rear shock absorber 30 even in an engine speed low state, powers is supplied to the front suspension system 2 or the rear suspension system 3. While the vehicle is stopped, the rider can check the actual damping force of the front fork 19 or the rear shock absorber 30. Here, the pressurizing operation carried out by the rider to the front fork 19 or the rear shock absorber 30 includes not only the operation of compressing the cushion member but also the operation of expanding the cushion member.

According to the present preferred embodiment, after the main switch 56 is turned on, the rider can check the actual damping force of the front fork 19 or the rear shock absorber 30 even before starting traveling.

If the engine speed is low and power supply to the front Suspension system 2 or the rear suspension system 3 is uniformly stopped, the damping characteristic of the cushion member becomes different between a vehicle-stopped state and a vehicle traveling state. While the vehicle is stopped, the rider cannot check the actual damping force of the front fork 19 or the rear shock absorber 30.

When the engine speed is low and pressure is not applied to the front fork 19 or the rear shock absorber 30, power supply to the front suspension system 2 or the rear suspension system 3 is stopped. In this way, the power consumption can be reduced effectively. According to the present preferred embodiment, both the riders' convenience and reduction in the power consumption can be achieved at a time.

The desire to check the damping characteristic of the front fork 19 or the rear shock absorber 30 while the vehicle is stopped is present regardless of the kinds of vehicles. There is particularly a strong demand for checking the damping characteristic of the front fork 19 or the rear shock absorber 30 while the vehicle is stopped in a motorcycle that has a plurality of selectable suspension modes as described in connection with the present preferred embodiment. The technique according to the present preferred embodiment is particularly effectively applied to a motorcycle having a plurality of selectable suspension modes.

It is often the case that the desire to check the damping characteristic of the front fork 19 is stronger than that of the rear shock absorber 30. The power saving control according to the present preferred embodiment is effective applied at least to the front fork 19.

According to the present preferred embodiment, the front suspension system 2 or the rear suspension system 3 includes two piston valves 52F and 53F or 52R and 53R. The electronically controlled suspension system according to the present preferred embodiment is not limited to the arrangement. The electronically controlled suspension system may use an MR fluid.

Now, other preferred embodiments of the present invention will be described. In the following description, members having substantially the same functions as those in the first preferred embodiment are designated by the same reference characters and their description will not be provided.

### Second Preferred Embodiment

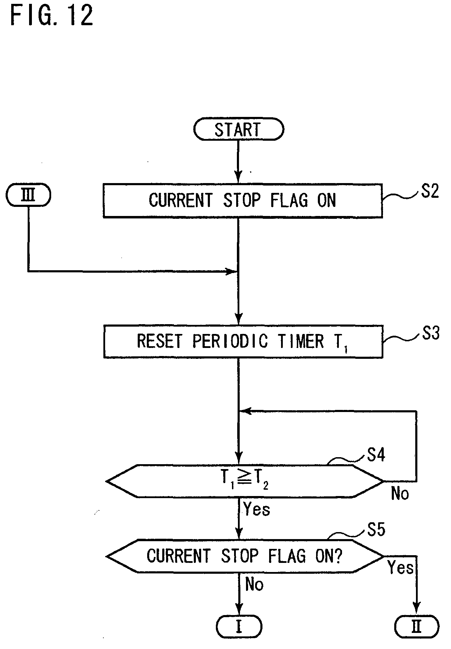

Fig. 12 is a flowchart for illustrating power saving control according to a second preferred embodiment of the present invention. According to the second preferred embodiment, the flowchart in Fig. 12 is referred to for the flow of control immediately after the main switch 56 is turned on. After the control according to the flowchart in Fig. 12, the control according to the flow-charts in Figs. 10 and 11 are carried out similarly to the first preferred embodiment.

According to the first preferred embodiment, when the main switch 56 is turned on, power supply to the first and second piston valves 52F, 53F, 52R and 53R is started in step S1 in Fig. 9. According to the second preferred embodiment, power supply to the first and second piston valves 52F, 53F, 52R and 53R is not started in this timing. As shown in Fig. 12, step S1 in Fig. 9 is not carried out when the main switch 56 is turned on and the control proceeds to step S2. The control allows the power consumption by the motorcycle 1 to be further reduced.

### Third Preferred Embodiment

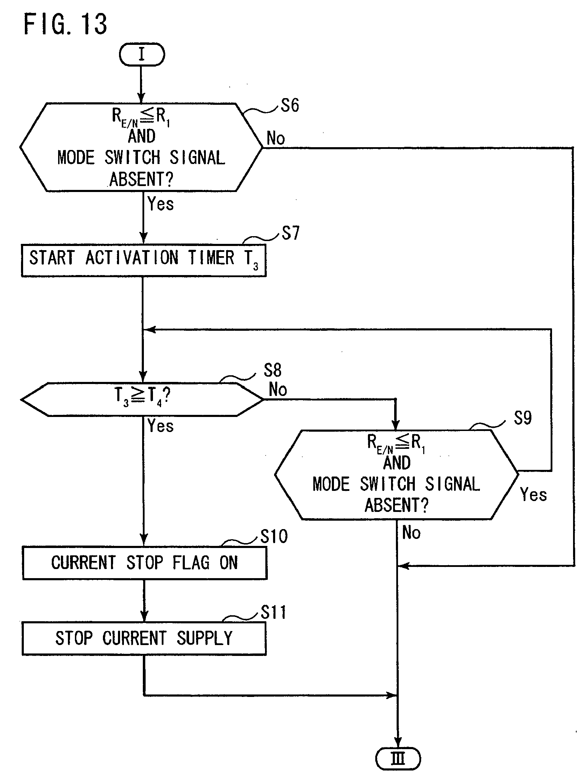

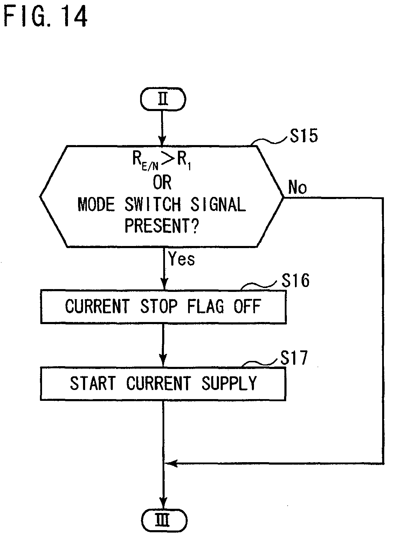

Figs. 13 and 14 are flowcharts for illustrating power saving control according to a third preferred embodiment of the present invention. The flow of control immediately after the main switch 56 is turned on is the same as that in the flowchart in Fig. 9 according to the first preferred embodiment. According to the third preferred embodiment, the flowcharts in Figs. 13 and 14 are used instead of the flowcharts in Figs. 10 and 11 according to the first preferred embodiment. The flowcharts in Figs. 13 and 14 are different from the flowcharts in Figs. 10 and 11 only in steps S6, S9 and S15.

According to the first preferred embodiment, the stroke speed is detected as operation to the electronically controlled suspension system. According to the third preferred embodiment, a mode switch signal output from the mode selection switch 57 is detected as operation to the electronically controlled suspension system. As shown in Figs. 13 and 14, the presence/absence of the mode switch signal as well as the engine speed is determined in steps S6, S9, and S15.

According to the third preferred embodiment, when the suspension mode is switched, power is supplied to the front suspension system 2 or the rear suspension system 3. The rider can check the damping characteristic of the front fork 19 or the rear shock absorber 30 for a prescribed period after the switching between the suspension modes. The rider can operate the mode se-, lection switch to check the damping characteristic of the front fork 19 or the rear shock absorber 30 even when the vehicle is in a stopped state. This is convenient when the rider checks the damping characteristic of the cushion member while switching between the suspension modes in a vehicle stopped state.

### Fourth Preferred Embodiment

In the power saving control according to the first preferred embodiment, when power supply to the front suspension system 2 or the rear suspension system 3 is stopped, the main relay 38c in Fig. 6 may be turned off. The ECU 38 turns off the main relay 38c when the power supply to the front suspension system 2 or the rear suspension system 3 is stopped. In this way, the power consumption can be reduced further effectively.

### Fifth Preferred Embodiment

According to the first preferred embodiment, the engine speed is detected to determine the traveling state. The traveling state does not have to be determined based only on the engine speed. The traveling state may be determined based on a vehicle speed detected by the vehicle speed sensor 55. In this case, in step S6 and the like, it is determined for example whether the detected speed by the vehicle speed sensor 55 is equal to or lower than a prescribed speed in addition to the stroke speed determination.

The power saving control according to the preferred embodiments may be applied to various types of motorcycles other than the type of motorcycle as shown in Fig. 1. The power saving control according to the preferred embodiments may be applied for example to a scooter, a moped, an off-road vehicle and the like. The motorcycles according to the preferred embodiments include a plurality of wheels and have at least one of the front wheel and the rear wheel rotated in an integral manner, and the motorcycle includes a vehicle that changes the advancing direction by inclining the vehicle.

While preferred embodiments of the present invention have been described above, it is to be understood that variations and modifications will be apparent to those skilled in the art without departing the scope of the present invention. The scope of the present invention, therefore, is to be determined solely by the following claims.

## Claims

1. A motorcycle (1), comprising:
a body frame (10);
a wheel (23, 28);
an electronically controlled suspension system (2, 3) that generates damping force at a cushion member (19, 30) provided between the body frame (10) and the wheel (23, 28);
a power supply (54) that supplies power to the electronically controlled suspension system (2, 3);
a controller (38) that controls the damping characteristic of the cushion member (19, 30) and the on/off state of power supply to the electronically controlled suspension system (2, 3) from the power supply (54);
an operation detector (37, 63, 57) that detects operation to the electronically controlled suspension system (2, 3); and
a traveling state detector (24a, 55) that detects the traveling state of the motorcycle (1),
the controller (38) determining whether it is necessary to supply power to the electronically controlled suspension system (2, 3) based on a detection result by the traveling state detector (24a, 55), and determining whether it is necessary to supply power to the electronically controlled suspension system (2, 3) based on a detection result by the operation detector (37, 63, 57),
**characterized in that**
the controller (38) controls the damping characteristic of the cushion member (19, 30) by supplying valves (52F, 52R, 53F, 53R) with constant current corresponding to damping force to be generated at the cushion member (19, 30), and
the controller (38) turns off power supply to the electronically controlled suspension system (2, 3) from the power supply (54) if it is both determined that it is not necessary to supply power based on each determination result.

2. The motorcycle (1) according to claim 1, further comprising an engine (24) attached to the body frame (10), wherein the traveling state detector (24a, 55) comprises a speed detector (24a) that detects the speed of the engine,
the controller (38) turns off power supply to the electronically controlled suspension system (2, 3) from the power supply (54) if the speed detected by the speed detector (24a) is at most a prescribed speed (R₁) and no operation to the electronically controlled suspension system (2, 3) is detected by the operation detector (37, 63, 57).

3. The motorcycle (1) according to claim 1, wherein the traveling state detector (24a, 55) comprises a speed detector (55) that detects a vehicle speed, and
the controller (38) turns off power supply to the electronically controlled suspension system (2, 3) from the power supply (54) if the speed detected by the speed detector (55) is at most a prescribed speed and no operation to the electronically controlled suspension system (2, 3) is detected by the operation detector (37, 63, 57).

4. The motorcycle (1) according to claim 2 or 3, wherein the controller (38) turns off power supply to the electronically controlled suspension system (2, 3) from the power supply (54) if the state in which the speed detected by the speed detector (24a, 55) is at most a prescribed speed (R₁) and no operation to the electronically controlled suspension system (2, 3) is detected by the operation detector (37, 63, 57) continues for a prescribed period (T₄).

5. The motorcycle (1) according to claim 2 or 3, wherein the controller (38) turns on power supply to the electronically controlled suspension system (2, 3) from the power supply (54) if the speed detected by the speed detector (24a, 55) is greater than the prescribed speed (R₁) or operation to the electronically controlled suspension system (2, 3) is detected by the operation detector (37, 63, 57).

6. The motorcycle (1) according to claim 1, wherein the operation detector (37, 63, 57) comprises an expansion/compression detector (37, 63) that detects the expansion/compression amount of the cushion member (19, 30), and
the operation to the electronically controlled suspension system (2, 3) includes pressurizing operation to the cushion member (19, 30).

7. The motorcycle (1) according to claim 1, wherein the controller (38) can control the electronically controlled suspension system (2, 3) in a plurality of modes with different damping characteristics,
the motorcycle (1) further comprising a mode selection switch (57) arranged to select one mode among the plurality of modes, and
the operation to the electronically controlled suspension system (2, 3) includes operation to switch the mode selection switch (57).

8. The motorcycle (1) according to claim 1, wherein the power supply (54) supplies the controller (38) with power,
the motorcycle (1) further comprising a main relay (38c) provided on a power supply line that connects the power supply (54) and the controller (38), and
the controller (38) turns off the main relay (38c) if the controller turns off power supply to the electronically controlled suspension system (2, 3) from the power supply (54) based on a detection result by the traveling state detector (24a, 55) and a detection result by the operation detector (37, 63, 57).

9. The motorcycle (1) according to claim 1, further comprising a main switch (56) that controls the on/off state of power supply to the controller (38) from the power supply (54), wherein the controller (38) turns on power supply to the electronically controlled suspension system (2, 3) from the power supply (54) when the main switch (56) is turned on.

10. The motorcycle (1) according to claim 2, wherein the prescribed speed (R₁) includes a speed lower than an idle engine speed for the engine (24).

11. The motorcycle (1) according to claim 1, wherein the wheel (23, 28) includes a front wheel (23), and the damping force of the cushion member (19) provided between the body frame (10) and the front wheel (23) is controlled by the electronically controlled suspension system (2).

12. The motorcycle (1) according to claim 11, wherein the wheel (23, 28) includes a rear wheel (28), and the damping force of the cushion member (19) provided between the body frame (10) and the front wheel (23) is controlled by the electronically controlled suspension system (2), and the damping force of the cushion member (30) provided between the body frame (10) and the rear wheel (28) is controlled by the electronically controlled suspension system (3).

13. The motorcycle (1) according to claim 1, further comprising a main switch (56) used to control the on/off state of power supply to the controller (38) from the power supply (54), wherein when the main switch (56) is turned on, the controller (38) controls power supply to the electronically controlled suspension system (2, 3) from the power supply (54) based on a detection result by the traveling state detector (24a, 55) and a detection result by the operation detector (37, 63, 57).

## Patentansprüche

1. Ein Motorrad (1), das folgende Merkmale aufweist:
einen Karosserierahmen (10);
ein Rad (32; 28);
ein elektronisch gesteuertes Aufhängungssystem (2, 3), das an einem Pufferbauteil (19, 30), das zwischen dem Karosserierahmen (10) und dem Rad (23, 28) vorgesehen ist, eine Dämpfungskraft erzeugt;
eine Leistungsversorgung (54), die das elektronisch gesteuerte Aufhängungssystem (2, 3) mit Leistung versorgt;
eine Steuerung (38), die die Dämpfungscharakteristik des Pufferbauteils (19, 30) und den Ein/Aus-Zustand der Leistungsversorgung von der Leistungsversorgung (54) zu dem elektronisch gesteuerten Aufhängungssystem (2, 3) steuert;
einen Betriebsdetektor (37, 63, 57), der einen Betrieb des elektronisch gesteuerten Aufhängungssystems (2, 3) erfasst; und
einen Fahrzustandsdetektor (24a, 55), der den Fahrzustand des Motorrads (1) erfasst,
wobei die Steuerung (38) basierend auf einem Erfassungsergebnis durch den Fahrzustandsdetektor (24a, 55) bestimmt, ob es nötig ist, das elektronisch gesteuerte Aufhängungssystem (2, 3) mit Leistung zu versorgen, und basierend auf einem Erfassungsergebnis durch den Betriebsdetektor (37, 63, 57) bestimmt, ob es nötig ist, das elektronisch gesteuerte Aufhängungssystem (2, 3) mit Leistung zu versorgen,
**dadurch gekennzeichnet, dass**:
die Steuerung (38) die Dämpfungscharakteristik des Pufferbauteils (19, 30) durch Versorgen von Ventilen (52F, 52R, 53F, 53R) mit einem konstanten Strom, der einer Dämpfungskraft entspricht, die an dem Pufferbauteil (19, 30) erzeugt werden soll, steuert, und
die Steuerung (38) eine Leistungsversorgung von der Leistungsversorgung (54) zu dem elektronisch gesteuerten Aufhängungssystem (2, 3) abschaltet, wenn basierend auf jedem Bestimmungsergebnis jeweils bestimmt wird, dass keine Leistungsversorgung notwendig ist.

2. Das Motorrad (1) gemäß Anspruch 1, das ferner einen Motor (24) aufweist, der an dem Karosserierahmen (10) angebracht ist, wobei der Fahrzustandsdetektor (24a, 55) einen Geschwindigkeitsdetektor (24a) aufweist, der die Geschwindigkeit des Motors erfasst,
wobei die Steuerung (38) eine Leistungsversorgung von der Leistungsversorgung (54) zu dem elektronisch gesteuerten Aufhängungssystem (2, 3) abschaltet, wenn die durch den Geschwindigkeitsdetektor (24a) erfasste Geschwindigkeit höchstens eine vorgeschriebene Geschwindigkeit (R₁) ist und kein Betrieb an dem elektronisch gesteuerten Aufhängungssystem (2, 3) durch den Betriebsdetektor (37, 63, 57) erfasst wird.

3. Das Motorrad (1) gemäß Anspruch 1, bei dem der Fahrzustandsdetektor (24a, 55) einen Geschwindigkeitsdetektor (55) aufweist, der eine Fahrzeuggeschwindigkeit erfasst, und
die Steuerung (38) eine Leistungsversorgung von der Leistungsversorgung (54) zu dem elektronisch gesteuerten Aufhängungssystem (2, 3) abschaltet, wenn die durch den Geschwindigkeitsdetektor (55) erfasste Geschwindigkeit höchstens eine vorgeschriebene Geschwindigkeit ist und kein Betrieb an dem elektronisch gesteuerten Aufhängungssystem (2, 3) durch den Betriebsdetektor (37, 63, 57) erfasst wird.

4. Das Motorrad (1) gemäß Anspruch 2 oder 3, bei dem die Steuerung (38) eine Leistungsversorgung von der Leistungsversorgung (54) zu dem elektronisch gesteuerten Aufhängungssystem (2, 3) abschaltet, wenn der Zustand, in dem die durch den Geschwindigkeitsdetektor (24a, 55) erfasste Geschwindigkeit höchstens eine vorgeschriebene Geschwindigkeit (R₁) ist und kein Betrieb an dem elektronisch gesteuerten Aufhängungssystem (2, 3) durch den Betriebsdetektor (37, 63, 57) erfasst wird, für einen vorgeschriebenen Zeitraum (T₄) andauert.

5. Das Motorrad (1) gemäß Anspruch 2 oder 3, bei dem die Steuerung (38) eine Leistungsversorgung von der Leistungsversorgung (54) zu dem elektronisch gesteuerten Aufhängungssystem (2, 3) einschaltet, wenn die durch den Geschwindigkeitsdetektor (24a, 55) erfasste Geschwindigkeit größer ist als die vorgeschriebene Geschwindigkeit (erz) oder ein Betrieb an dem elektronisch gesteuerten Aufhängungssystem (2, 3) durch den Betriebsdetektor (37, 63, 57) erfasst wird.

6. Das Motorrad (1) gemäß Anspruch 1, bei dem der Betriebsdetektor (37, 63, 57) einen Ausdehnungs-/Kompressionsdetektor (37, 63) aufweist, der eine Ausdehnungs-/Kompressionsmenge des Pufferbauteils (19, 30) erfasst, und
der Betrieb an dem elektronisch gesteuerten Aufhängungssystem (2, 3) einen Druckbeaufschlagungsbetrieb an dem Pufferbauteil (19, 30) beinhaltet.

7. Das Motorrad (1) gemäß Anspruch 1, bei dem die Steuerung (38) das elektronisch gesteuerte Aufhängungssystem (2, 3) in einer Mehrzahl von Modi mit unterschiedlichen Dämpfungscharakteristika steuern kann;
das Motorrad (1) ferner einen Modusauswahlschalter (57) aufweist, der angeordnet ist, um einen Modus unter der Mehrzahl von Modi auszuwählen, und
der Betrieb an dem elektronisch gesteuerten Aufhängungssystem (2, 3) einen Betrieb zum Umschalten des Modusauswahlschalters (57) beinhaltet.

8. Das Motorrad (1) gemäß Anspruch 1, bei dem die Leistungsversorgung (54) die Steuerung (38) mit Leistung versorgt,
das Motorrad (1) ferner ein Hauptrelais (38c) aufweist, das an einer Leistungsversorgungsleitung vorgesehen ist, die die Leistungsversorgung (54) und die Steuerung (38) verbindefi, und
die Steuerung (38) das Hauptrelais (38c) abschaltet, wenn die Steuerung eine Leistungsversorgung von der Leistungsversorgung (54) zu dem elektronisch gesteuerten Aufhängungssystem (2, 3) basierend auf einem Erfassungsergebnis durch den Fahrzustandsdetektor (24a, 55) und ein Erfassungsergebnis durch den Betriebsdetektor (37, 63, 57) abschaltet.

9. Das Motorrad (1) gemäß Anspruch 1, das ferner einen Hauptschalter (56) aufweist, der den Ein/Aus-Zustand der Leistungsversorgung von der Leistungsversorgung (54) zu der Steuerung (38) steuert, wobei die Steuerung (38) eine Leistungsversorgung von der Leistungsversorgung (54) zu dem elektronisch gesteuerten Aufhängungssystem (2, 3) einschaltet, wenn der Hauptschalter (56) eingeschaltet ist.

10. Das Motorrad (1) gemäß Anspruch 2, bei dem die vorgeschriebene Geschwindigkeit (R,) eine Geschwindigkeit umfasst, die niedriger ist als eine Leerlaufmotorgeschwindigkeit für den Motor (24).

11. Das Motorrad (1) gemäß Anspruch 1, bei dem das Rad (23, 28) ein Vorderrad (23) umfasst und die Dämpfungskraft des Pufferbauteils (19), das zwischen dem Karosserierahmen (10) und dem Vorderrad (23) vorgesehen ist, durch das elektronisch gesteuerte Aufhängungssystem (2, 3) gesteuert wird.

12. Das Motorrad (1) gemäß Anspruch 11, bei dem das Rad (23, 28) ein Hinterrad (28) umfasst und die Dämpfungskraft des Pufferbauteils (19), das zwischen dem Karosserierahmen (10) und dem Vorderrad (23) vorgesehen ist, durch das elektronisch gesteuerte Aufhängungssystem (2) gesteuert wird und die Dämpfungskraft des Pufferbauteils (30), das zwischen dem Karosserierahmen (10) und dem Hinterrad (28) vorgesehen ist, durch das elektronisch gesteuerte Aufhängungssystem (3) gesteuert wird.

13. Das Motorrad (1) gemäß Anspruch 1, das ferner einen Hauptschalter (56) aufsweist, der verwendet wird, um den Ein/Aus-Zustand einer Leistungsversorgung von der Leistungsversorgung (54) zu der Steuerung (38) zu steuern, wobei, wenn der Hauptschalter (56) eingeschaltet ist, die Steuerung (38) eine Leistungsversorgung von der iA_eisiungsversorgung (54) zu dem elektronisch gesteuerten Aufhängungssystem (2, 3) basierend auf einem Erfassungsergebnis durch den Fahrzustandsdetektor (24a, 55) und einem Erfassungsergebnis durch den Betriebsdetektor (37, 63, 57) steuert.

## Revendications

1. Motocyclette (1), comprenant:
un châssis de carrosserie (10);
une roue (23, 28);
un système de suspension à commande électronique (2, 3) qui génère une force d'amortissement à un élément de coussin (19, 30) prévu entre le châssis de carrosserie (10) et la roue (23, 28);
une alimentation électrique (54) qui alimente du courant vers le système de suspension à commande électronique (2, 3);
un contrôleur (38) qui contrôle la caractéristique d'amortissement de l'élément de coussin (19, 30) et l'état activé/désactivé de l'alimentation de courant vers le système de suspension à commande électronique (2, 3) par l'alimentation électrique (54);
un détecteur d'actionnement (37, 63, 57) qui détecte l'actionnement du système de suspension à commande électronique (2, 3); et
un détecteur d'état de déplacement (24a, 55) qui détecte l'état de déplacement de la motocyclette (1),
le contrôleur (38) déterminant s'il est nécessaire d'alimenter du courant vers le système de suspension à commande électronique (2, 3) sur base d'un résultat de détection par le détecteur d'état de déplacement (24a, 55), et déterminant s'il est nécessaire d'alimenter du courant vers le système de suspension à commande électronique (2, 3) sur base d'un résultat de détection par le détecteur d'actionnement (37, 63, 57),
**caractérisée par le fait que**
le contrôleur (38) contrôle la caractéristique d'amortissement de l'élément de coussin (19, 30) en alimentant les soupapes (52F, 52R, 53F, 53R) en un courant constant correspondant à une force d'amortissement à générer à l'élément de coussin (19, 30), et
le contrôleur (38) désactive l'alimentation de courant vers le système de suspension à commande électronique (2, 3) par l'alimentation électrique (54) s'il est déterminé qu'il n'est pas nécessaire d'alimenter du courant sur base de chaque résultat de détermination.

2. Motocyclette (1) selon la revendication 1, comprenant par ailleurs un moteur (24) fixé au châssis de carrosserie (10), dans lequel le détecteur d'état de déplacement (24a, 55) comprend un détecteur de vitesse (24a) qui détecte la vitesse de moteur,
le contrôleur (38) désactive l'alimentation de courant vers le système de suspension à commande électronique (2, 3) par l'alimentation électrique (54) si la vitesse détectée par le détecteur de vitesse (24a) est de tout au plus une vitesse prescrite (R₁), et qu'il n'est pas détecté d'actionnement du système de suspension à commande électronique (2, 3) par le détecteur d'actionnement (37, 63, 57).

3. Motocyclette (1) selon la revendication 1, dans laquelle le détecteur d'état de déplacement (24a, 55) comprend un détecteur de vitesse (55) qui détecte une vitesse de véhicule, et
le contrôleur (38) désactive l'alimentation de courant vers le système de suspension à commande électronique (2, 3) par l'alimentation électrique (54) si la vitesse détectée par le détecteur de vitesse (55) est de tout au plus la vitesse prescrite et qu'il n'est pas détecté d'actionnement du système de suspension à commande électronique (2, 3) par le détecteur d'actionnement (37, 63, 57).

4. Motocyclette (1) selon la revendication 2 ou 3, dans laquelle le contrôleur (38) désactive l'alimentation de courant vers le système de suspension à commande électronique (2, 3) par l'alimentation électrique (54) si l'état dans lequel la vitesse détectée par le détecteur de vitesse (24a, 55) est de tout au plus une vitesse prescrite (R₁) et qu'il n'est pas détecté d'actionnement du système de suspension à commande électronique (2, 3) par le détecteur d'actionnement (37, 63, 57) continue pendant un laps de temps prescrit (T₄).

5. Motocyclette (1) selon la revendication 2 ou 3, dans laquelle le contrôleur (38) active l'alimentation de courant vers le système de suspension à commande électronique (2, 3) par l'alimentation électrique (54) si la vitesse détectée par le détecteur de vitesse (24a, 55) est supérieure à la vitesse prescrite (R₁) ou qu'il est détecté un actionnement du système de suspension à commande électronique (2, 3) par le détecteur d'actionnement (37, 63, 57).

6. Motocyclette (1) selon la revendication 1, dans laquelle le détecteur d'actionnement (37, 63, 57) comprend un détecteur d'expansion/compression (37, 63) qui détecte la quantité d'expansion/compression de l'élément de coussin (19, 30), et
l'actionnement du système de suspension à commande électronique (2, 3) comprend l'opération de mise sous pression de l'élément de coussin (19, 30).

7. Motocyclette (1) selon la revendication 1, dans laquelle le contrôleur (38) peut commander le système de suspension à commande électronique (2, 3) selon une pluralité de modes à caractéristiques d'amortissement différentes,
la motocyclette (1) comprenant par ailleurs un commutateur de sélection de mode (57) aménagé pour sélectionner un mode parmi la pluralité de modes, et
l'actionnement du système de suspension à commande électronique (2, 3) comprend l'opération consistant à commuter le commutateur de sélection de mode (57).

8. Motocyclette (1) selon la revendication 1, dans laquelle l'alimentation électrique (54) alimente le contrôleur (38) en courant,
la motocyclette (1) comprenant par ailleurs un relais principal (38c) prévu sur une ligne d'alimentation de courant qui connecte l'alimentation électrique (54) et le contrôleur (38), et
le contrôleur (38) désactive le relais principal (38c) lorsque le contrôleur désactive l'alimentation de courant vers le système de suspension à commande électronique (2, 3) par l'alimentation électrique (54) sur base d'un résultat de détection par le détecteur d'état de déplacement (24a, 55) et d'un résultat de détection par le détecteur d'actionnement (37, 63, 57).

9. Motocyclette (1) selon la revendication 1, comprenant par ailleurs un commutateur principal (56) qui commande l'état d'activation/désactivation de l'alimentation de courant vers le contrôleur (38) par l'alimentation électrique (54), dans laquelle le contrôleur (38) active l'alimentation de courant vers le système de suspension à commande électronique (2, 3) par l'alimentation électrique (54) lorsque le commutateur principal (56) est activé.

10. Motocyclette (1) selon la revendication 2, dans laquelle la vitesse prescrite (R₁) comporte une vitesse inférieure à une vitesse de ralenti du moteur (24).

11. Motocyclette (1) selon la revendication 1, dans laquelle la roue (23, 28) comporte une roue avant (23), et la force d'amortissement de l'élément de coussin (19) prévu entre le châssis de carrosserie (10) et la roue avant (23) est contrôlée par le système de suspension à commande électronique (2).

12. Motocyclette (1) selon la revendication 11, dans laquelle la roue (23, 28) comprend une roue arrière (28), et la force d'amortissement de l'élément de coussin (19) prévu entre le châssis de carrosserie (10) et la roue avant (23) est contrôlée par le système de suspension à commande électronique (2), et la force d'amortissement de l'élément de coussin (30) prévu entre le châssis de carrosserie (10) et la roue arrière (28) est contrôlée par le système de suspension à commande électronique (3).

13. Motocyclette (1) selon la revendication 1, comprenant par ailleurs un commutateur principal (56) utilisé pour commander l'état d'activation/désactivation de l'alimentation de courant vers le contrôleur (38) par l'alimentation électrique (54), dans laquelle, lorsque le commutateur principal (56) est activé, le contrôleur (38) contrôle l'alimentation de courant vers le système de suspension à commande électronique (2, 3) par l'alimentation électrique (54) sur base d'un résultat de détection par le détecteur d'état de déplacement (24a, 55) et d'un résultat de détection par le détecteur d'actionnement (37, 63, 57).
